(19) Europäisches Patentamt
European Patent Office
Office européen des brevets

(11) Numéro de publication : **0 331 594 B1**

(12) **FASCICULE DE BREVET EUROPEEN**

(45) Date de publication du fascicule du brevet : **22.01.92 Bulletin 92/04**

(51) Int. Cl.$^5$ : **C09C 1/30,** C09C 3/00, C08K 3/36

(21) Numéro de dépôt : **89420078.1**

(22) Date de dépôt : **28.02.89**

(54) **Silice de précipitation à propriétés améliorées.**

(30) Priorité : **03.03.88 FR 8802985**

(43) Date de publication de la demande : **06.09.89 Bulletin 89/36**

(45) Mention de la délivrance du brevet : **22.01.92 Bulletin 92/04**

(84) Etats contractants désignés : **AT BE CH DE ES FR GB GR IT LI LU NL SE**

(56) Documents cités :
**EP-A- 0 031 288**
**FR-A- 1 234 245**
**FR-A- 2 257 326**
**US-A- 2 938 009**

(73) Titulaire : **RHONE-POULENC CHIMIE**
**25, quai Paul Doumer**
**F-92408 Courbevoie Cédex (FR)**

(72) Inventeur : **Joachim, Francis**
**93 montée Bon Accueil**
**F-38200 Vienne (FR)**
Inventeur : **Jost, Philippe**
**rue de la Cordonnerie Taluyers Cidex A 13**
**F-69440 Taluyers (FR)**
Inventeur : **Lagarde, Robert**
**5 rue des Lilas**
**F-69320 Feyzin (FR)**

(74) Mandataire : **Fabre, Madeleine-France et al**
**RHONE-POULENC CHIMIE Direction des Brevets Secteur Spécialités Chimiques 25, quai Paul-Doumer**
**F-92408 Courbevoie Cédex (FR)**

EP 0 331 594 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention se rapporte à une silice de précipitation, utilisable notamment pour la préparation de compositions pour élastomères silicones vulcanisables à chaud, ainsi qu'à un procédé de préparation d'une telle silice de précipitation.

Il est connu de préparer des compositions pour élastomères silicones vulcanisables à chaud à partir de silice de combustion. De façon générale les silices de combustion donnent satisfaction du point de vue technique pour cette application et sont traitées avant leur introduction dans les compositions, par un polysiloxane, de préférence par des cyclopolysiloxanes, notamment par un cyclotétrasiloxane, et plus spécialement par de l'octaméthylcyclotétrasiloxane (D4), vers 400°C. Des brevets mentionnant ce genre de traitement sont connus, notamment par le :

— brevet français FR-A-1234245 de la Société RHONE-POULENC, dans lequel, à l'exemple 2, on traite la silice de combustion par du D4 à 375°C, ainsi que par le

— brevet français FR-A-1520663 de la même Société, dans lequel (voir exemple 1), on opère à une température de 500°C.

A l'heure actuelle on cherche à utiliser le plus possible de la silice de précipitation à la place, (en tout ou partie), de la silice de combustion, car la silice de précipitation est moins chère. Or il s'avère que, contrairement aux silices de combustion, les silices de précipitation disponibles actuellement sur le marché, et soumises à un traitement notamment par l'octaméthylcyclotétrasiloxane (D4) à 400°C perdent leur blancheur initiale ; elles grisaillent. Ceci est gênant car les élastomères obtenus à partir de compositions renfermant de telles silices de précipitation sont eux-mêmes grisaillants et ils ne peuvent être incolores, ou avoir des couleurs franches lorsque des pigments ont été introduits dans de telles compositions.

Un but de la présente invention est donc une silice de précipitation qui peut être introduite notamment dans des compositions permettant l'obtention d'élastomères vulcanisables à chaud, lesdits élastomères n'ayant pas de teintes grisaillantes lorsque ces dernières teintes ne sont pas souhaitées. Plus particulièrement un but de la présente invention est une silice de précipitation permettant l'obtention d'élastomères vulcanisables à chaud ayant des couleurs franches, ou l'obtention d'élastomères transparents.

Un autre but de la présente invention est une silice permettant l'obtention d'élastomères vulcanisables à chaud (EVC) ayant des propriétés mécaniques semblables à celles d'EVC obtenus à partir de silice de combustion.

Un autre but de la présente invention est une silice de précipitation pouvant être utilisée notamment pour préparer des élastomères vulcanisables à froid (EVF) ayant de bonnes propriétés mécaniques, ainsi que de coloration ou de transparence.

Un autre but de la présente invention est une silice de précipitation pouvant renforcer des polymères, notamment des polymères siloxaniques, et plus particulièrement des élastomères vulcanisables à chaud.

Un autre but de la présente invention est également un procédé simple d'obtention de telles silices de précipitation.

Il a donc été trouvé et c'est ce qui fait l'objet de la présente invention, une silice de précipitation, utilisable notamment comme charge pour la préparation de compositions siloxaniques, plus spécialement pour la préparation de compositions pour élastomères vulcanisables à chaud, caractérisée en ce qu'elle est obtenable à partir d'une silice de précipitation commerciale ayant une luminance Y supérieure ou égale à 90 par traitement gazeux oxydant, à une température supérieure à 250°C pendant plus d'une minute et en ce qu' :

a) — elle a une luminance Y d'au moins 90,

b) — lorsqu'elle est soumise à un traitement à 400°C, sous courant d'azote, pendant 4 heures, sa luminance Y diminue au plus de 5,5%,

c) — lorsqu'elle est soumise à un traitement par un courant d'octaméthylcyclotétrasiloxane, à 400°C, pendant 1 heure 30, sa luminance Y diminue au plus de 5,5%.

L'objet de la présente invention est également un procédé permettant d'obtenir une telle silice de précipitation, ledit procédé étant caractérisé en ce que l'on soumet une silice de précipitation commerciale ayant une luminance Y égale ou supérieure à 90 à un traitement oxydant à une température supérieure à 250°C pendant plus d'une minute.

Un autre objet de la présente invention est une composition pour élastomère vulcanisable à chaud comportant une telle silice, ainsi qu'une composition pour élastomère vulcanisable à froid, et renfermant une telle silice de précipitation.

De façon avantageuse la silice de précipitation selon la présente invention est caractérisée en ce que :

a) — sa luminance Y est d'au moins 92,

b) — lorsqu'elle est soumise à un traitement à 400°C, sous courant d'azote, pendant 4 heures, sa luminance Y diminue au plus de 4%,

c) — lorsqu'elle est soumise à un traitement par un courant d'octaméthylcyclotétrasiloxane, à 400°C, pendant 1 heure 30, sa luminance Y diminue au plus de 5,5%.

Pour mesurer la luminance Y de la silice de précipitation selon la présente invention il a été opéré de la façon suivante. On se sert du photocolorimètre TRISTIMULUS de marque ELREPHO fabriqué par la firme CARL ZEISS et permettant la mesure de la réflexion diffuse (éclairage diffus/observation 0°). Cet appareil bien connu des personnes s'occupant de colorimétrie comprend une sphère d'intégration et deux sources lumineuses (lampes à filament de tungstène) qui illuminent l'échantillon à analyser disposé dans une cuve que l'on a placée dans la partie inférieure de cette sphère d'intégration, qui comprend à cet endroit une fenêtre de mesure ayant un diamètre de 35 mm (millimètres). Cet échantillon réfléchit cette lumière au travers du filtre Y positionné dans la partie supérieure de la sphère d'intégration et on mesure cette intensité lumineuse (composante verte de l'échantillon) après qu'elle ait traversé ce filtre Y par mise au zéro de l'aiguille du galvanomètre de l'appareil, grâce à un tambour tournant gradué. Il ne reste plus qu'à lire sur le tambour gradué la valeur obtenue, correspondant à la luminance Y de l'échantillon qu'on analyse, ce tambour ayant été étalonné préalablement à la mesure de l'échantillon, par exemple grâce à un étalon secondaire (VITROLITHE) dont on connaît la valeur de la luminance Y par rapport au sulfate de baryum dont la luminance Y est égale à 100. Ainsi avec cet appareil, un échantillon aussi blanc que le sulfate de baryum aura une luminance Y de 100, tandis qu'un échantillon rigoureusement noir aura une luminance Y de 0, les valeurs intermédiaires à ces deux bornes correspondant à toutes les nuances de gris. Les cuves dans lesquelles sont disposés les échantillons dont on veut mesurer la luminance Y sont livrées par CARL ZEISS avec l'appareil ELREPHO. Ces cuves permettent d'obtenir des échantillons (de poudre) dont le diamètre est de 40 mm et dont la hauteur est de 3 à 5 mm. Les échantillons à mesurer ont ainsi tous les mêmes dimensions.

Ainsi la valeur maximale de la luminance Y de la silice de précipitation selon la présente invention est de 100. Généralement la valeur de la luminance Y de la silice de précipitation selon la présente invention est au moins de 90 et au plus de 99.

L'appareillage pour traiter la silice de précipitation à 400°C, pendant 4 heures, est constitué par exemple par :

— un appareil cylindrique en verre ou en inox dont le diamètre interne est de 66 mm, cet appareil comportant dans sa partie inférieure un verre fritté (n° 2) et au moins une tubulure par laquelle est injecté l'azote en continu. Sur le verre fritté on dispose la silice de précipitation qu'on veut soumettre à l'action de l'azote à 400°C, pendant 4 heures. Un agitateur métallique agite cette silice (vitesse de rotation 90 tr/mn). L'appareil (dont l'axe longitudinal est disposé verticalement) comprend dans sa partie haute une tubulure permettant le passage de l'azote dans un cyclone en verre dans lequel l'azote arrive tangentiellement et a ainsi une circulation circulaire permettant, dans la partie inférieure du cyclone, le dépôt de la petite partie de silice éventuellement entraînée par le courant d'azote. Dans la partie supérieure du cyclone (et en son centre) se trouve une tubulure permettant le passage de l'azote au travers d'un condenseur (réfrigérant) dans lequel circule de l'eau à 20°C. A la sortie du condenseur on recueille dans un récipient à l'air libre (à la pression atmosphérique) les infimes parties de produits condensés.

Pour avoir une température de 400°C de la silice de précipitation on chauffe avec un four disposé autour de l'appareil cyclindrique.

On charge dans l'appareil cylindrique par exemple 30 g de silice de précipitation et on fait circuler un courant d'azote compris entre 5 et 20 l/h (litres par heure).

Généralement cet essai de caractérisation d'une silice de précipitation selon la présente invention est réalisé en utilisant un débit d'azote de 15 l/h pour 30 g de silice.

Avec l'appareillage et le mode opératoire décrits ci-avant il est facile de déterminer les silices de précipitation faisant l'objet de la présente invention et ayant la caractéristique b). En effet les silices de précipitation actuellement disponibles sur le marché auxquelles on fait subir le traitement à l'azote à 400°C, pendant 4 heures, perdent toutes plus de 5,5% de luminance Y par rapport à leur valeur initiale (généralement supérieure à 90 avant ce traitement).

Pour la détermination de la caractéristique c) de la silice selon la présente invention on peut opérer avec le même appareillage que celui décrit ci-avant. On place la silice (30 g) sur le verre fritté, on agite, et lorsque la température atteint 400°C, on injecte au-dessous du verre fritté et pendant 1 heure 30 de l'azote et de l'octaméthylcyclotétrasiloxane (D4), le débit d'azote étant de 15 l/h, tandis que celui du D4 est de 20 $cm^3/h$ (le D4 se vaporise instantanément dès son injection dans l'appareil). Les silices de précipitation selon la présente invention perdent au plus 5,5% de leur luminance Y après ce traitement.

Pour l'obtention de silice de précipitation dont la luminance Y varie de moins de 5,5% après un traitement à 400°C sous azote pendant 4 heures, et dont la luminance Y diminue au plus de 5,5% lorsque la silice est soumise à un traitement par un courant d'octaméthyl cyclotétrasiloxane, à 400, pendant 1 h 30, la demanderesse a soumis les silices de précipitation actuellement disponibles à la vente sur le marché (et dont la luminance est généralement égale ou supérieure à 90) à un traitement oxydant. Ce traitement oxydant peut être effectué avec de l'oxygène ou un mélange gazeux contenant de l'oxygène, et avantageusement, pour des raisons de coût et de sécurité, il est effectué avec de l'air. Ce traitement a lieu à une température supérieure à 250°C, généralement entre 300 et 900°C et dure entre 1 minute et 5 heures. Ce traitement dure d'autant moins longtemps que la température est plus élevée.

Industriellement le traitement oxydant peut être réalisé en lit fluidisé ou par un traitement sous air pulsé en utilisant des appareils classiques déjà utilisés pour le traitement de charges par d'autres éléments gazeux. En laboratoire ce traitement oxydant peut être réalisé dans le même appareillage en verre ou en inox que celui décrit ci-avant pour traiter les silices à l'azote à 400°C pendant 4 heures. Généralement le débit d'air est de 5 à 20 litres pour entre 10 et 100 g de silice de précipitation à traiter.

Les silices de précipitation auxquelles ont fait subir ce traitement oxydant ont une granulométrie moyenne généralement comprise entre 0,1 et 20 microns, de préférence entre 0,5 et 10 microns et leur surface spécifique BET est supérieure à 50 $m^2/g$, de préférence comprise entre 50 et 350 $m^2/g$. Par granulométrie moyenne on entend une diamètre moyen des particules.

Les silices de précipitation ayant subi le traitement oxydant décrit ci-avant peuvent être utilisées telles quelles comme charges de renforcement dans les polymères, notamment dans les polymères organopolysiloxaniques, par exemple pour la préparation de compositions permettant l'obtention d'élastomères vulcanisant à la température ambiante. Avantageusement ces silices de précipitation (ayant subi ce traitement oxydant) sont utilisées pour la préparation de compositions pour élastomères vulcanisables à chaud. Dans cette application ces silices de précipitation sont traitées, après le traitement oxydant décrit ci-avant, par un polysiloxane, par un cyclopolysiloxane ou un mélange de cyclopolysiloxane(s) et/ou de polysiloxane(s), à une température supérieure à 250°C avantageusement comprise entre 300 et 550°C.

Avantageusement le cyclopolysiloxane utilisé est un cyclotétrasiloxane, choisi notamment parmi le tétraméthyltétravinylcyclotétrasiloxane et l'octaméthylcyclotétrasiloxane. Si on utilise un polysiloxane linéaire, celui-ci peut être par exemple du décaméthyltétrasiloxane. Le traitement de silices par de tels composés siloxaniques sont connus notamment par les brevets français FR-A-1234245 et FR-A-1520663 de la Société RHONE-POULENC. La température de 550°C peut éventuellement être dépassée pour ce traitement, mais pour des raisons économiques on préfère ne pas aller au-delà.

Les silices de précipitation selon l'invention auxquelles on fait subir un traitement par de l'octaméthylcyclotétrasiloxane (D4) à 400°C, pendant 1 heure 30, ont une luminance Y qui diminue au plus de 5,5%, le traitement par le D4 étant réalisé en faisant passer un mélange D4 + azote, le débit d'azote introduit étant de 15 l/h et la quantité de D4 injecté en bas de l'appareillage en verre ou en inox décrit ci-avant étant de 20 $cm^3/h$, la masse de $SiO_2$ étant de 30 g.

Les élastomères silicones vulcanisables à chaud, obtenus avec les silices de précipitation selon l'invention, ayant de plus subi un traitement par un organopolysiloxane ou un organocyclopolysiloxane, ont des couleurs franches, c'est-à-dire non "grisaillantes" lorsqu'on a ajouté des pigments à leur composition, ou sont translucides ou transparents (sans être gris) lorsque les compositions ne comportent pas de pigments. Il a été constaté que les meilleures qualités mécaniques de ces élastomères vulcanisables à chaud (appelés aussi vulcanisats) ont été obtenues avec une silice de précipitation selon l'invention ayant une granulométrie moyenne de 1 à 7 microns.

Les élastomères vulcanisables à chaud (vulcanisats) obtenus avec la silice de précipitation selon la présente invention ayant subi de plus un traitement avec un polysiloxane à 400°C ont une luminance Y qui est supérieure d'au moins 5,5%, par rapport à la luminance Y d'un vulcanisat obtenu dans les mêmes conditions avec une silice de précipitation n'ayant pas subi de traitement thermique oxydant, mais ayant subi le traitement avec le polysiloxane à 400°C. Ces mesures de luminance Y sont effectuées avec le photomètre ELREPHO décrit plus haut et en suivant le même mode d'étalonnage, sur des vulcanisats ayant une épaisseur de 2 mm que l'on a disposés chacun sur un support étalonné (VITROLITHE Y = 77,85), les mesures ayant été effectuées dès que les vulcanisats ont été démoulés et refroidis.

Les compositions siloxaniques permettant l'obtention des élastomères vulcanisés à chaud (vulcanisats) ayant les propriétés ci-avant comprennent en poids :

a) — 100 parties d'une gomme diorganopolysiloxanique ayant une viscosité supérieure à 1000000 mPa · s à 25°C,

b) — 0,1 à 7 parties d'un péroxyde organique,

c) — 5 à 150 parties d'une silice de précipitation selon la présente invention, ayant subi un traitement thermique oxydant et ensuite un traitement par un polysiloxane.

Cette gomme diorganopolysiloxane, citée en a), de viscosité supérieure à 1000000 mPa · s à 25°C, est formée d'un enchaînement de motifs de formule $R_2SiO$, bloquée à chaque extrémité de sa chaîne par un motif de formule $R_3SiO_{0,5}$ et/ou un radical de formule OR' ; dans ces formules les symboles R, identiques ou différents, représentent des radicaux méthyle, éthyle, n-propyle, phényle, vinyle et trifluoro-3,3,3 propyle au moins 60% de ces radicaux étant méthyle et au plus 3% étant vinyle, le symbole R′ représente un atome d'hydrogène, un radical alcoyle ayant de 1 à 4 atomes de carbone, le radical bétaméthoxy-éthyle.

Ces compositions comprennent de préférence de plus d) de 0,5 à 15 parties d'une huile diorganopolysiloxane de viscosité d'au plus 5000 mPa · s à 25°C formée d'un enchaînement de motifs de formule $R''_2SiO$ bloquée à chaque extrémité de sa chaîne par un radical de formule OR′ ; dans ces formules les symboles R″, identiques ou différents, représentent des radicaux méthyle, phényle, vinyle, au moins 40% de ces radicaux étant méthyle et le symbole R′ a la signification donnée ci-avant dans a).

Les différents constituants de ces compositions sont explicités plus en détail ci-dessous.

Les gommes diorganopolysiloxanes a) de viscosité supérieure à 1000000 mPa · s à 25°C, de préférence supérieure à 2000000 mPa · s à 25°C, sont des polymères linéaires, de poids moléculaire élevé, dont la chaîne diorganopolysiloxane est constituée essentiellement des motifs de formule précitée $R_2SiO$ ; cette chaîne est bloquée à chaque extrémité par des motifs de formules $R_3SiO_{0,5}$ et/ou le radical de formule OR′. La présence, le long de la chaîne diorganopolysiloxanique, de faibles quantités de motifs autres que $R_2SiO$, par exemple de formules $RSiO_{1,5}$ et/ou $SiO_2$ n'est cependant pas exclue dans la proportion d'au plus 2% par rapport au nombre de motifs $R_2SiO$. Bien que la signification des radicaux R et R′ soient explicités ci-dessus, on doit préciser que par radical alcoyle, on entend des radicaux alcoyles en $C_1$-$C_4$ et plus spécialement les radicaux méthyle, éthyle, n-propyle et n-butyle.

A titres d'exemples concrets de motifs de formules $R_2SiO$ et $R_3SiO_{0,5}$ et de radicaux de formule OR′, peuvent être cités ceux de formules :

$$(CH_3)_2SiO,\ CH_3(CH_2=CH)SiO,\ CH_3(C_6H_5)SiO,\ (C_6H_5)_2SiO,$$

$$CH_3(C_2H_5)SiO,\ (CH_3CH_2CH_2)CH_3SiO,\ CH_3(n\cdot C_3H_7)SiO,$$

$$(CH_3)(C_6H_5)(CH_2=CH)SiO_{0,5},$$

$$-OH,\ -OCH_3,\ -OC_2H_5,\ -O\text{-}n\cdot C_3H_7,\ -O\text{-}iso\cdot C_3H_7,\ -O\text{-}n\cdot C_4H_9,$$

$$-OCH_2CH_2OCH_3.$$

Ces gommes a), qui peuvent être utilisées en mélange pour représenter les 100 parties de gomme des compositions selon la présente invention, comprennent généralement moins de 3% de groupements vinyle et le plus souvent ces groupements vinyle représentent de 0,005 à 1,5% du nombre de radicaux liés aux atomes de silicium.

Les gommes a) sont commercialisées par les fabricants de silicones ; d'autre part, elles peuvent être fabriquées en opérant selon les techniques déjà connues.

L'huile diorganopolysiloxane citée en d) est utilisée à raison de 0 à 15 parties, de préférence de 0,3 à 12 parties pour 100 parties de gomme a). Cette huile ou ces huiles sont des polymères linéaires de viscosité relativement peu élevée, au plus 5000 mPa · s à 25°C, de préférence au plus 4000 mPa · s à 25°C, dont la chaîne diorganopolysiloxanique est formée essentiellement des motifs de formule précitée $R''_2SiO$ ; cette chaîne est bloquée à chaque extrémité par un radical de formule précitée OR′. Au moins 40% des radicaux R″ sont des radicaux méthyle, de préférence au moins 45%.

La signification des symboles R″ et R′ a été explicitée précédemment.

A titre d'exemples concrets de motifs de formule $R''_2SiO$ et de radicaux de formule OR′, peuvent être cités ceux de formules :

$$(CH_3)_2SiO,\ CH_3(CH_2=CH)SiO,\ CH_3(C_6H_5)SiO,\ (C_6H_5)_2SiO,$$

$$C_6H_5(CH_2=CH)SiO,$$

$$-OH,\ -OCH_3,\ -OC_2H_5,\ -O\text{-}n\cdot C_3H_7\ -OCH_2CH_2OCH_3.$$

De préférence, sont utilisées :

— des huiles diméthylpolysiloxanes bloquées à chaque extrémité de leur chaîne par des radicaux hydroxyle, méthoxyle, bétaméthoxyéthoxyle, de viscosité 10 à 200 mPa · s à 25°C ;

— des huiles méthylphénylpolysiloxanes, constituées de motifs $CH_3(C_6H_5)SiO$, bloquées à chaque extrémité de leur chaîne par des radicaux hydroxyle et/ou méthoxyle, de viscosité 40 à 2000 mPa · s à 25°C.

L'utilisation de ces huiles d) a pour objet d'empêcher les compositions de l'invention de subir une évolution au cours du stockage, et plus précisément de se structurer, de durcir ; ce sont donc des agents "antistructures". Leur utilisation est surtout recommandée lorsque les quantités de silices renforçantes c) sont élevées, par exemple au-dessus de 30-40 parties pour 100 parties de gommes a).

D'autres agents "antistructure" peuvent remplacer en totalité ou en partie, les huiles d), par exemple le diphénylsilanediol et les silanes de formules :

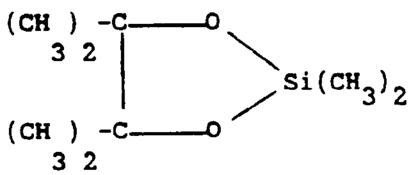

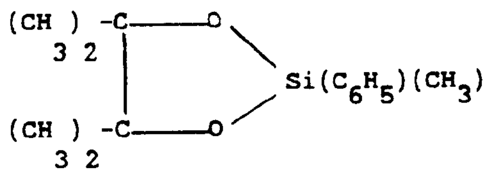

Cependant, ils sont souvent plus coûteux et/ou exigent plus de travail pour leur dispersion dans les compositions de l'invention que les huiles d).

Les péroxydes organiques b) sont utilisés à raison de 0,1 à 7 parties, de préférence 0,2 à 5 parties, pour 100 parties des gommes a). Ils sont bien connus des techniciens et comprennent plus spécialement le péroxyde de benzoyle, le péroxyde de dichloro-2,4 benzoyle, le péroxyde de dicumyle, le bis(t-butylpéroxy)2,5 diméthyl-2,5 hexane, le perbenzoate de t-butyle, le carbonate de péroxy t-butyle et d'isopropyle, le péroxyde di-t-butyle, le bis(t-butylpéroxy)-1,1 triméthyl-3,3,5 cyclohexane.

Ces divers péroxydes se décomposent à des températures et à des vitesses parfois différentes. Ils sont choisis en fonction des conditions de durcissement exigées.

Ces compositions permettant l'obtention de vulcanisats non grisaillants peuvent comprendre de plus, 0,02 à 4 parties (pour 100 parties de gomme a)), de préférence 0,03 à 3 parties d'un composé organosilicique comportant, relié à l'atome de silicium, au moins un groupe acryloyloxyalkylène ou méthacryloyloxyalkylène, ledit composé ayant la formule :

$$CH_2 = CR_3COO(CH_2)_w\underset{\displaystyle (R'')_u}{\underset{|}{Si}}(OR_4)_{3-u}$$

dans laquelle le symbole R" représente des radicaux méthyle, phényle, vinyle, le symbole $R_3$ représente un atome d'hydrogène, le radical méthyle, le symbole $R_4$ représente un radical méthyle, éthyle, n-propyle, bétaméthoxyéthyle, le symbole w représente un nombre de 1 à 5 et le symbole u représente un nombre de 0 à 2.

Des produits de ce type sont décrits, par exemple dans le brevet américain US-A-3567497. A titre d'exemples concrets peuvent être cités les produits ayant les formules suivantes :

$$CH_2 = CH\text{-}COOCH_2Si(OCH_3)_3$$

$$CH_2 = CH\text{-}COOCH_2Si(OCH_2CH_2OCH_3)_2C_6H_5$$

$$CH_2 = CH\text{-}COO(CH_2)_3Si(OC_2H_5)_3$$

$$CH_2 = C(CH_3)COO(CH_2)_3Si(OCH_3)_3$$

$$CH_2 = C(CH_3)COO(CH_2)_3SiCH_3(OCH_3)_2$$

$$CH_2 = C(CH_3)COO(CH_2)_5Si(OCH_3)_3$$

La préparation de ces compositions s'effectue à l'aide de moyens mécaniques connus, par exemple de pétrins, de mélangeurs à cylindres, de mélangeurs à vis. Les divers constituants sont incorporés dans ces appareils dans un ordre pouvant être quelconque. Il est toutefois recommandé de charger tout d'abord les gommes a) et la silice de précipitation c) selon la présente invention, puis de charger en dernier lieu le péroxyde b).

— EXEMPLES :

Les exemples suivants montrent l'utilité du traitement selon la présente invention sur deux silices de précipitation actuellement disponibles sur le marché et sur une silice de précipitation fabriquée par la Société RHONE-POULENC, par mesure de la luminance Y de telles silices. Ces exemples montrent également la luminance Y de vulcanisats obtenues à partir de silices selon la présente invention et de silices de précipitation disponibles sur le marché n'ayant pas subi de traitement thermique oxydant.

Les silices étudiées sont :

— la silice de précipitation, référence FK 160, commercialisée par la Société DEGUSSA, de granulométrie moyenne égale à 6 microns, de surface spécifique BET 160 $m^2/g$,

— la silice de précipitation, référence NIPSIL LP, commercialisée par la Société NIPPON SILICA, de granulométrie moyenne égale à 10 microns et de surface spécifique BET de 150 $m^2/g$,

— la silice de précipitation fabriquée par la Société RHONE-POULENC selon l'exemple 1 du brevet français FR-A-2471947 de RHONE-POULENC et ayant une granulométrie moyenne de 1,5 microns et une surface spécifique BET 175 $m^2/g$.

Le tableau 1 ci-après indique la luminance Y de ces trois silices de précipitation, tout d'abord sans avoir subi aucun traitement, puis en fonction des traitements subis dans l'ordre de 1 à 3, le traitement 3′ ayant été effectué après le traitement 2 (de même que le traitement 3).

TABLEAU 1

| SILICES | FK 160 | NIPSIL LP | RP 175 MS |
|---|---|---|---|
| Sans aucun traitement | 95 | 96 | 96 |
| 1. - Traitées 4 heures à 400 °C sous courant d'azote | 80 | 89 | 75 |
| 2. - Traitées 1 heure 30 à 400 °C sous courant d'air | 95 | 96 | 93 |
| 3. - Traitées à nouveau 4 heures à 400 °C sous courant d'azote | 92 | 95 | 91 |
| 3'. - Traitées 1 heure 30 à 400 °C par de l'octaméthylcyclo-tétrasiloxane (D4) | 90 | 94 | 90 |
| 1'. -Traitées 1 heure 30 à 400 °C, avec D4, sans aucun traitement préalable | 80 | 90 | 75 |

On se rend bien compte par ce tableau 1 que les silices de précipitation selon la présente invention (repérées en 2) ont une luminance Y supérieure à 90, qu'elles perdent (voir en 3) moins de 5,5% de leur luminance Y lorsqu'elles sont soumises à un traitement, sous courant d'azote, à 400°C, pendant 4 heures, qu'elles perdent (voir en 3') moins de 5,5% de luminance Y lorsqu'elles sont soumises à un traitement par le D4, à 400°C, pendant 1 heure 30.

Au contraire les silices de précipitation selon l'art antérieur (qui n'ont subi aucun traitement) perdent (voir en 1) plus de 6% de leur luminance Y lorsqu'elles sont soumises à un traitement sous courant d'azote, à 400°C, pendant 4 heures, et perdent (voir en 1') plus de 6% de luminance Y lorsqu'elles sont soumises à un traitement par le D4, à 400°C, pendant 1 heure 30.

Des vulcanisats ont été réalisés en mélangeant (en poids) sur un mélangeur tricylindres, à température ambiante :

— 100 parties d'une gomme diorganopolysiloxane, de viscosité 1 à 10 millions de mPa · s (millipascals · seconde) à 25°C, bloquée à chaque extrémité de sa chaîne par un motif triméthylsiloxy, comportant 0,2% en mole de groupement méthylvinylsiloxy dans sa chaîne,

— 40 parties d'une silice de précipitation selon le tableau 2,

— 1,4 partie d'une huile diméthylpolysiloxane de viscosité 40 mPa · s à 25°C, bloquée à chaque extrémité de sa chaîne par un radical hydroxylé lié à l'atome de silicium terminal,

— 0,5 partie de diméthyl-2,5 di(tertiobutylpéroxy-2,5)hexane.

Le mélange obtenu est alors vulcanisé 10 minutes à 170°C sous 150 bars et on obtient des échantillons dont l'épaisseur est de 2 mm.

Le tableau 2 ci-après indique la luminance des vulcanisats (obtenus selon le mode opératoire décrit ci-avant), en fonction des silices de départ utilisées et en fonction des traitements auxquels elles ont été soumises.

TABLEAU 2

| VULCANISATS AVEC SILICE | FK 160 | NIPSIL LP | RP 175 MS |
|---|---|---|---|
| Sans aucun traitement des silices | 57 | 58 | 56 |
| Avec silices traitées 4 heures à 400 °C sous courant d'azote | 40 | 52 | 38 |
| Avec silices traitées 1 heure 30 par D4 à 400 °C | 38 | 51 | 38 |
| Avec silices traitées 1 heure 30 à 400 °C, sous courat d'air | 56 | 57 | 53 |
| Avec silices traitées 1 heure 30 par courant d'air à 400 °C, puis par D4 à 400 °C, pendant 1 heure 30. | 53 | 54 | 55 |

Ce tableau 2 montre que les vulcalisats obtenus avec les silices de précipitation selon la présente invention ayant subi un traitement par le D4, à 400°C, pendant 1 heure 30, ont une luminance Y supérieure d'au moins 4% par rapport à la luminance Y de la même silice ayant subi le même traitement par le D4, mais n'ayant pas subi le traitement thermique oxydant.

Les caractéristiques mécaniques du vulcanisat obtenu avec la silice RP 175 MS après que cette dernière ait été traitée 1 heure 30, à 400°C, sous courant d'air, puis par le D4 à 400°C, pendant 1 heure 30, sont indiquées ci-après.

Ce vulcanisat a une luminance Y de 55 (voir tableau 2) et ses propriétés mécaniques, à l'état non recuit, sont les suivantes :

— DS(A) : 46

— RR (MPa) : 5,2

— AR % : 420

— RD (KN/m) : 16

Les abréviations ont la signification suivante :

— DS(A) : dureté SHORE (A) selon la norme ATSM 2240,

— RR : résistance à la rupture en mégapascals (MPa) selon la norme AFNOR T 46002 correspondant à la norme ASTMD 412,
— AR : allongement à la rupture en % selon la norme AFNOR T 46002,
— RD : résistance à la déchirure en KN/m (kilonewton-métre) selon la norme ASTMD 624.

## Revendications

1. Silice de précipitation, utilisable notamment comme charge pour la préparation de compositions siloxaniques, plus spécialement pour la préparation de compositions pour élastomères vulcanisables à chaud, caractérisée en ce qu'elle est obtenable à partir d'une silice de précipitation commerciale ayant une luminance Y supérieure ou égale à 90 par traitement gazeux oxydant, à une température supérieure à 250°C pendant plus d'une minute et en ce qu' :
a) — elle a une luminance Y d'au moins 90,
b) — lorsqu'elle est soumise à un traitement à 400°C, sous courant d'azote, pendant 4 heures, sa luminance Y diminue au plus de 5,5%,
c) — lorsqu'elle est soumise à un traitement par un courant d'octaméthylcyclotétrasiloxane, à 400°C, pendant 1 heure 30, sa luminance Y diminue au plus de 5,5%.

2. Silice de précipitation selon la revendication 1 caractérisée en ce que :
a) — sa luminance Y est d'au moins 92,
b) — lorsqu'elle est soumise à un traitement à 400°C, sous courant d'azote, pendant 4 heures, sa luminance Y diminue au plus de 4%,
c) — lorsqu'elle est soumise à un traitement par un courant d'octaméthylcyclotétrasiloxane, à 400°C, pendant 1 heure 30, sa luminance Y diminue au plus de 5,5%.

3. Silice de précipitation selon l'une quelconque des revendications précédentes, caractérisée en ce que sa surface spécifique BET est supérieure à 50 $m^2/g$.

4. Silice de précipitation selon l'une quelconque des revendications précédentes, caractérisée en ce que sa surface spécifique BET est comprise entre 50 et 350 $m^2/g$.

5. Silice de précipitation selon l'une quelconque des revendications précédentes, caractérisée en ce que sa granulométrie moyenne est comprise entre 0,1 et 20 microns, de préférence entre 0,5 et 10 microns.

6. Procédé pour la préparation d'une silice de précipitation selon l'une quelconque des revendications précédentes, caractérisé en ce que l'on soumet une silice de précipitation commerciale ayant une luminance Y égale ou supérieure à 90 à un traitement gazeux oxydant à une température supérieure à 250°C pendant plus d'une minute.

7. Procédé selon la revendication 6, caractérisé en ce que le traitement oxydant a lieu entre 300 et 900°C.

8. Procédé selon l'une quelconque des revendications 6 à 7, caractérisé en ce que le traitement oxydant dure entre 5 minutes et 5 heures.

9. Procédé selon l'une quelconque des revendications 6 à 8, caractérisé en ce que le traitement oxydant a lieu en lit fluidisé.

10. Utilisation de la silice obtenue selon l'une quelconque des revendications 6 à 9 pour le renforcement de polymères.

11. Utilisation de la silice obtenue selon l'une quelconque des revendications 6 à 9 pour le renforcement de polymères organopolysiloxaniques.

12. Utilisation de la silice obtenue selon l'une quelconque des revendications 6 à 9 pour la préparation de compositions polysiloxanes.

13. Utilisation de la silice obtenue selon l'une quelconque des revendications 6 à 9 pour la préparation de compositions siloxaniques, plus spécialement pour la préparation de compositions pour élastomères vulcanisables à chaud, après que cette silice ait subi de plus un traitement par un organopolysiloxane, plus spécialement par un cyclopolysiloxane, notamment par de l'octaméthylcyclotétrasiloxane à une température supérieure à 250°C, de préférence comprise entre 300 et 550°C.

14. Composition organopolysiloxane, caractérisée en ce qu'elle renferme une silice de précipitation selon l'une quelconque des revendications 1 à 5.

15. Composition siloxanique vulcanisable à chaud, caractérisée en ce qu'elle comprend en poids :
a) — 100 parties d'une gomme diorganopolysiloxanique ayant une viscosité supérieure à 1000000 mPa · s à 25°C,
b) — 0,1 à 7 parties d'un peroxyde organique,
c) — 5 à 150 parties d'une silice de précipitation selon l'une quelconque des revendications 1 à 5, après qu'elle ait subi de plus un traitement par un organopolysiloxane, de préférence un organocyclopolysiloxane, à une température supérieure à 250°C, de préférence comprise entre 300 et 550°C,

d) — de 0 à 15 parties d'une huile diorganopolysiloxane de viscosité au plus 5000 mPa · s à 25°C formée d'un enchaînement de motifs de formule $R''_2SiO$ bloquée à chaque extrémité de sa chaîne par un radical de formule OR' ; dans ces formules les symboles R'', identiques ou différents, représentent des radicaux méthyle, phényle, vinyle, au moins 40% de ces radicaux étant méthyle et le symbole R' représente un atome d'hydrogène, un radical alcoyle ayant de 1 à 4 atomes de carbone, le radical bétaméthoxy-éthyle.

16. Vulcanisat obtenu avec la composition selon la revendication 15, le traitement par un organocyclopolysiloxane ayant eu lieu à 400°C, pendant 1 heure 30, caractérisé en ce qu'il a une luminance Y supérieure d'au moins 5,5%, par rapport à la luminance Y d'un vulcanisat obtenu dans les mêmes conditions, avec la même silice de précipitation n'ayant pas subi de traitement thermique oxydant, mais ayant subi le traitement avec le polysiloxane à 400°C.

## Patentansprüche

1. Fällungskieselsäure, verwendbar insbesondere als Füllstoff für die Herstellung von Siloxanzusammensetzungen, besonders zur Herstellung von Zusammensetzungen für heißvulkanisierbare Elastomere, dadurch gekennzeichnet, daß sie erhältlich ist ausgehend von einer handelsüblichen Fällungskieselsäure mit einer Leuchtdichte Y größer oder gleich 90 durch oxidierende Gasbehandlung bei einer Temperatur über 250°C während mehr als 1 Minute und daß :

a) sie eine Leuchtdichte Y von mindestens 90 hat,

b) wenn sie einer Behandlung bei 400°C unter einem Stickstoffstrom während 4 Stunden unterworfen wird, ihre Leuchtdichte sich höchstens um 5,5% verringert,

c) wenn sie einer Behandlung mit einem Octamethylcyclotetrasiloxanstrom bei 400°C während 1 Stunde 30 Minuten unterworfen wird, ihre Leuchtdichte Y sich höchstens um 5,5% verringert.

2. Fällungskieselsäure gemäß Anspruch 1, dadurch gekennzeichnet, daß :

a) ihre Leuchtdichte Y mindestens 92 beträgt,

b) wenn sie einer Behandlung bei 400°C unter einem Stickstoffstrom während 4 Stunden unterworfen wird, ihre Leuchtdichte sich höchstens um 4% verringert,

c) wenn sie einer Behandlung mit einem Octamethylcyclotetrasiloxanstrom bei 400°C während 1 Stunde 30 Minuten unterworfen wird, ihre Leuchtdichte Y sich höchstenns um 5,5% verringert.

3. Fällungskieselsäure gemäß einem der vorhergehenden Ansprüche, dadurch gekennzeichnet, daß ihre spezifische Oberfläche BET größer als 50 $m^2/g$ ist.

4. Fällungskieselsäure gemäß einem der vorhergehenden Ansprüche, dadurch gekennzeichnet, daß ihre spezifische Oberfläche BET zwischen 50 und 350 $m^2/g$ ist.

5. Fällungskieselsäure gemäß einem der vorhergehenden Ansprüche, dadurch gekennzeichnet, daß ihre mittlere Korngröße zwischen 0,1 und 20 Mikron, vorzugsweise zwischen 0,5 und 10 Mikron, ist.

6. Verfahren zur Herstellung einer Fällungskieselsäure gemäß einem der vorhergehenden Ansprüche, dadurch gekennzeichnet, daß man eine handelsübliche Fällungskieselsäure mit einer Leuchtdichte Y gleich oder größer als 90 einer oxidierenden Gasbehandlung bei einer Temperatur höher als 250°C während mehr als 1 Minute unterwirft.

7. Verfahren gemäß Anspruch 6, dadurch gekennzeichnet, daß die oxidierende Behandlung zwischen 300 und 900°C stattfindet.

8. Verfahren gemäß einem der Ansprüche 6 bis 7, dadurch gekennzeichnet, daß die oxidierende Behandlung zwischen 5 Minuten und 5 Stunden dauert.

9. Verfahren gemäß einem der Ansprüche 6 bis 8, dadurch gekennzeichnet, daß die oxidierende Behandlung im Fließbett stattfindet.

10. Verwendung der gemäß einem der Ansprüche 6 bis 9 erhaltenen Kieselsäure zur Verstärkung von Polymeren.

11. Verwendung der gemäß einem der Ansprüche 6 bis 9 erhaltenen Kieselsäure zur Verstärkung von Organopolysiloxanpolymeren.

12. Verwendung der gemäß einem der Ansprüche 6 bis 9 erhaltenen Kieselsäure zur Herstellung von Polysiloxanzusammensetzungen.

13. Verwendung der gemäß einem der Ansprüche 6 bis 9 erhaltenen Kieselsäure zur Herstellung von Siloxanzusammensetzungen, insbesondere zur Herstellung von Zusammensetzungen für heißvulkanisierbare Elastomere, nachdem diese Kieselsäure außerdem einer Behandlung mit einem Organopolysiloxan, besonders durch ein Cyclopolysiloxan, ganz besonders durch Octamethylcyclotetrasiloxan, bei einer Temperatur über 250°C, vorzugsweise zwischen 300 und 550°C, unterworfen wurde.

14. Organopolysiloxanzusammensetzung, dadurch gekennzeichnet, daß sie eine Fällungskieselsäure gemäß einem der Ansprüche 1 bis 5 enthält.

15. Heißvulkanisierbare Siloxanzusammensetzung, dadurch gekennzeichnet, daß sie, ausgedrückt in Gewicht, enthält :

a) 100 Teile eines Diorganopolysiloxangummis mit einer Viskosität über 1000000 mPa · s bei 25°C,

b) 0,1 bis 7 Teile eines organischen Peroxids,

c) 5 bis 150 Teile einer Fällungskieselsäure gemäß einem der Ansprüche 1 bis 5, nachdem sie außerdem einer Behandlung mit einem Organopolysiloxan, vorzugsweise einem Organocyclopolysiloxan, bei einer Temperatur über 250°C, vorzugsweise zwischen 300 und 550°C, unterworfen wurde,

d) 0 bis 15 Teile eines Diorganopolysiloxanöls der Viskosität höchstens 5000 mPa · s bei 25°C, gebildet aus einer Kette von Gruppen der Formel $R''_2$ SiO, blockiert an jedem Ende seiner Kette durch einen Rest der Formel OR′ ; in diesen Formeln bedeuten die Symbole R″, die identisch oder verschieden sind, Methyl-, Phenyl-, Vinylreste, wobei mindestens 40% dieser Reste Methyl sind, und das Symbol R′ bedeutet ein Wasserstoffatom, einen Alkylrest mit 1 bis 4 Kohlenstoffatomen, den Betamethoxyethylrest.

16. Vulkanisat, erhalten mit der Zusammensetzung gemäß Anspruch 15, wobei die Behandlung mit einem Organocyclopolysiloxan bei 400°C während 1 Stunde 30 Minuten stattgefunden hat, dadurch gekennzeichnet, daß sie eine Leuchtdichte bzw. Leuchtkraft Y um mindestens 5,5% erhöht hat, in bezug auf die Leuchtdichte bzw. Leuchtkraft Y eines Vulkanisats, das unter den gleichen Bedingungen mit der gleichen Fällungskieselsäure erhalten wurde, die nicht der oxidierenden thermischen Behandlung unterworfen wurde, die jedoch der Behandlung mit dem Polysiloxan bei 400°C unterworfen wurde.

## Claims

1. Precipitated silica capable of being employed especially as filler for the preparation of siloxane compositions, more especially for the preparation of compositions for hot-vulcanisable elastomers, characterised in that it can be obtained from a commercial precipitated silica which has a luminance Y higher than or equal to 90 by oxidising gaseous treatment at a temperature above 250°C for more than one minute and in that :

a) — it has a luminance Y of at least 90,

b) — when subjected to a treatment at 400°C under a stream of nitrogen for 4 hours, its luminance Y decreases by at most 5.5%,

c) — when it is subjected to a treatment with a stream of octamethylcyclotetrasiloxane at 400°C for 1 hour 30, its luminance Y decreases by at most 5.5%.

2. Precipitated silica according to Claim 1, characterised in that :

a) — its luminance Y is at least 92,

b) — when it is subjected to a treatment at 400°C under a stream of nitrogen for 4 hours, its luminance Y decreases by at most 4%,

c) — when it is subjected to a treatment with a stream of octamethylcyclotetrasiloxane at 400°C for 1 hour 30, its luminance Y decreases by at most 5.5%.

3. Precipitated silica according to either of the preceding claims, characterised in that its BET specific surface area is greater than 50 $m^2/g$.

4. Precipitated silica according to any one of the preceding claims, characterised in that its BET specific surface area is between 50 and 350 $m^2/g$.

5. Precipitated silica according to any one of the preceding claims, characterised in that its mean particle size is between 0.1 and 20 microns, preferably between 0.5 and 10 microns.

6. Process for the preparation of a precipitated silica according to any one of the preceding claims, characterised in that a commercial precipitated silica which has a luminance Y equal to or higher than 90 is subjected to an oxidising gaseous treatment at a temperature above 250°C for more than one minute.

7. Process according to Claim 6, characterised in that the oxidising treatment takes place between 300 and 900°C.

8. Process according to either of Claims 6 to 7, characterised in that the oxidising treatment lasts between 5 minutes and 5 hours.

9. Process according to any one of Claims 6 to 8, characterised in that the oxidising treatment takes place in a fluidised bed.

10. Use of the silica obtained according to any one of Claims 6 to 9 for the reinforcement of polymers.

11. Use of the silica obtained according to any one of Claims 6 to 9 for the reinforcement of organopolysiloxane polymers.

12. Use of the silica obtained according to any one of Claims 6 to 9 for the preparation of polysiloxane

compositions.

13. Use of the silica obtained according to any one of Claims 6 to 9 for the preparation of siloxane compositions, more especially for the preparation of compositions for hot-vulcanisable elastomers, after this silica has additionally been subjected to a treatment with an organopolysiloxane, more especially with a cyclopolysiloxane, especially with octamethylcyclotetrasiloxane at a temperature above 250°C, preferably between 300 and 550°C.

14. Organopolysiloxane composition characterised in that it contains a precipitated silica according to any one of Claims 1 to 5.

15. Hot-vulcanisable siloxane composition characterised in that it comprises, by weight :

a) — 100 parts of a diorganopolysiloxane resin which has a viscosity higher than 1,000,000 mPa s at 25°C,

b) — 0.1 to 7 parts of an organic peroxide,

c) — 5 to 150 parts of a precipitated silica according to any one of Claims 1 to 5, after it has additionally been subjected to a treatment with an organopolysiloxane, preferably an organocyclopolysiloxane, at a temperature above 250°C, preferably between 300 and 550°C,

d) — from 0 to 15 parts of a diorganopolysiloxane oil with a viscosity not exceeding 5,000 mPa s at 25°C, consisting of a chain sequence of units of formula $R''_2SiO$ blocked by a radical of formula OR′ at each end of its chain ; in these formulae the symbols R″, which are identical or different, denote methyl, phenyl or vinyl radicals, at least 40% of these radicals being methyl, and the symbol R′ denotes a hydrogen atom, an alkyl radical containing 1 to 4 carbon atoms, or the betamethoxyethyl radical.

16. Vulcanisate obtained with the composition according to Claim 15, the treatment with an organo-cyclopolysiloxane having taken place at 400°C for 1 hour 30, characterised in that it has a luminance Y at least 5.5% higher when compared with the luminance Y of a vulcanisate obtained in the same conditions with the same precipitated silica which has not been subjected to an oxidising heat treatment but which has been subjected to the treatment with the polysiloxane at 400°C.